# EUROPEAN PATENT APPLICATION

(11) **EP 2 910 529 A1**
(43) Date of publication of application: **26.08.2015**
(21) Application number: 14156039.1
(22) Date of filing: 20.02.2014
(51) Int. Cl.: C02F 1/42, B01J 47/02, B01J 20/28, A47J 31/60, C02F 103/02

(54) **Liquid treatment device and system and method of treating a liquid**

(71) Applicant: Brita GmbH, 65232 Taunusstein (DE)
(72) Inventor: WALDE, Hilmar, 65510 Hünstetten-Wallbach (DE); NAGEL, Thomas, 35796 Weinbach (DE); ZÖLLER, Jochen, 56355 Nastätten (DE)
(74) Representative: Meissner, Bolte & Partner GbR

(57) **Abstract**

A liquid treatment device for placement in a tank (1) includes a housing made at least in part of pervious sheet material. The housing contains a filling. The filling includes a liquid treatment medium for treating liquid contacting the liquid treatment medium. At least one recess (5;12;16) for receiving at least an end section of a projecting fitting (2) is pre-formed in at least one outer wall of the housing.

## Description

The invention relates to a liquid treatment device for placement in a tank and including a housing made at least in part of pervious sheet material,
wherein the housing contains a filling, the filling including a liquid treatment medium for treating liquid contacting the liquid treatment medium.

The invention also relates to a liquid treatment system including:
a tank for accommodating liquid to be treated; and
a fitting defining an outlet of the tank,
the fitting protruding from a wall of the tank into its interior.

The invention also relates to a method of treating a liquid in a tank, e.g. a tank of an appliance,
the tank being arranged to accommodate liquid to be treated,
wherein the tank is provided with a fitting protruding from a wall of the tank into its interior,
wherein the method includes placing a liquid treatment device in the tank,
the liquid treatment device including a housing made at least in part of pervious sheet material,
wherein the housing contains a filling, the filling including a liquid treatment medium for treating liquid contacting the liquid treatment medium.

An example of such a liquid treatment device is disclosed in BWT Water + More, "BWT Best Save Datenblatt", downloaded at http://www.bwt-cam.com/shopdocuments/Records/Documents/Download/BWTbestsave D D E 06.2013.pdf on 1 November 2013. This device is a limescale protection pad for appliances for preparing hot beverages having an integrated water tank. The pad is made of non-woven material and comprises a food-grade ion exchanger for binding calcium ions in the water and preventing the creation of calcium carbonate leading to limescale deposits. Integrated activated carbon binds undesired components in the water. The concentration of heavy metals such as copper and zinc stemming from water pipes is reduced. The non-woven material guarantees optimal flow through the filter material. After unpacking, the pad is held under running water for a short period of time and then placed directly on the bottom of the tank of e.g. a coffee machine. After the tank has been filled, the ion exchanger requires 8-10 hours to remove calcium from the untreated water.

The known pad has an essentially oblong shape with a logo standing out in relief from one major surface.

A problem of the known device is that it takes a relatively long time for the water in the tank to be treated, because the calcium ions must diffuse towards the pad. It would be possible to place the pad on top of the tank outlet. However, such an outlet generally comprises a fitting protruding from a bottom wall of the tank to which a proprietary water treatment cartridge other than the pad is meant to be connected. If placed on such a fitting, much of the water would bypass the pad, which is relatively stiff, beneath it.

It is an object of the invention to provide a liquid treatment device, system and method of the types defined above in the opening paragraph suited for ensuring that liquid to be treated passes through the device along a sufficiently long path before leaving the tank.

This object is achieved by the device according to the invention, which is characterised in that at least one recess for receiving at least an end section of a projecting fitting is pre-formed in at least one outer wall of the housing.

As mentioned above, tanks provided in beverage machines, steamers and other appliances generally have a projecting fitting formed on a bottom wall. The fitting is arranged to mate with a liquid treatment cartridge by means of a proprietary interface. The proposed liquid treatment device can be placed over the fitting, but need not be provided with the appropriate interface parts. Rather, the fitting is received in the recess, such that the device housing surrounds at least the end section but preferably the whole of the projecting part of the fitting. Where the projecting part has lateral openings, the device ensures that these are covered. A stiff oblong pad could only cover an upward-facing opening of a projecting fitting. It would be possible to cover such lateral openings of the fitting using a flexible bag made of pervious sheet material and filled with liquid treatment medium, but the (generally granular) medium in such a bag would sink to the bottom, so that most of the medium would surround the fitting and it could not be guaranteed that a sufficiently thick layer of treatment medium overlies the top of the fitting. By contrast, the device according to the invention can ensure that a layer with a defined thickness surrounds the projecting fitting laterally and at its end. Because the housing is made at least in part of pervious sheet material, the liquid can flow in easily, and it presents relatively little flow resistance. Generally, the sheet material will form the majority of the walls of the housing. The recess or recesses is or are delimited by such sheet material, which may be reinforced by ribs of a different, stiffer material. The relatively low flow resistance means that the appliance provided with the tank need not include a stronger suction pump for drawing liquid from the tank.

In an embodiment, the housing is at least reversibly, e.g. elastically, deformable.

The liquid treatment device can therefore have a relatively large volume and still be used with many different tanks and appliances. It can be deformed to pass it through a relatively narrow fill opening of the tank and then revert to its original shape. Thus, it is still ensured that at least the end section of the projecting fitting is surrounded by the liquid treatment device.

In an embodiment, the housing, seen in plan view, has an outline essentially in the shape of one of an oval, a rhombus and a rhomboid.

The housing thus has at least one orientation in which it has a width smaller than its length. This allows it to be passed through smaller fill openings of tanks. The shapes, in particular the oval shape, still provide a relatively large volume for the filling. The plan view will generally be in a direction parallel to a principal axis of the housing. This may be the principal axis corresponding to the smallest dimension of the housing, with the housing being wider and longer than it is high.

In an embodiment, the recess is formed by an indentation debossed in a section of the sheet material.

This embodiment is relatively easy and cheap to manufacture. The recess walls are self-supporting. The recess is formed such as to retain its shape without external support. There is thus no need for a frame or for strengthening ribs in addition to the pervious sheet material. The housing walls can thus be made essentially only of sheet material. The liquid treatment device is thus also easier to recycle when it has reached the end of its useful life span. Moreover, the liquid treatment device is more deformable without a framework or strengthening ribs, allowing it to be passed through relatively small filling openings of tanks. The recess may be obtainable by being drawn mechanically into a forming die, e.g. by thermoforming. This is a relatively straightforward way of providing a self-supporting recess in sheet material.

In an embodiment, at least all outer surfaces of the housing are defined essentially only by sheet material.

Thus, the liquid treatment device is constructed essentially as a pad, but with at least one recess. It is relatively easy and cheap to manufacture.

In an embodiment, the housing includes a first sheet of material joined at a circumferential edge to at least a second sheet of material.

This embodiment is relatively easy to manufacture. The filling is located between the first and second sheets. The first and second sheets may by themselves form all outer walls of the housing. Thus, in such an embodiment, the first sheet of material is joined at and along its entire circumferential edge to the second sheet of material.

In a variant, at least one, e.g. only the first, of the first and second sheets is essentially flat along at least its circumference.

Thus, there is provided a relatively flat surface for bonding to the other sheet. In an embodiment, the first sheet is essentially completely flat, having no protruding parts or indentations.

In a variant, the second sheet is obtainable by being drawn mechanically into a forming die, e.g. by thermoforming, such as to form a lateral wall extending to a circumferential edge, and the first and second sheets are joined to each other at their circumferential edges.

This embodiment makes manufacturing easier. The second sheet can be formed into a bowl, which may then be filled with the filling before the first sheet is placed on top and joined to the second sheet along the circumferential edges of the first and second sheets. To this end, the lateral wall may flare outwards to include a strip along the circumferential edge lying essentially in a plane. The strip essentially functions as a flange, providing a flat contact surface on which to place the first sheet. In an embodiment, the second sheet is also provided with the at least one recess, so that only one sheet need be formed into a three-dimensional shape.

In a variant, the first and second sheets are welded together.

This variant is suitable for treating potable liquids without requiring food-grade adhesives. Adhesives certified for use with potable liquids, in particular drinking water, are relatively rare. The sheets may be welded together ultrasonically.

In an embodiment, the pervious sheet material is a textile material, e.g. a non-woven material.

Such material can be formed, in particular thermoformed, relatively easily without affecting its permeability to liquid. The material may comprise a mix of different fibres, some of which may be active in treating the liquid to be treated.

In an embodiment, the sheet material includes a thermoplastic material.

Such material is suitable for thermoforming and can also be welded relatively easily. An example of a suitable material is polypropylene, which can be spun into fibres, e.g. to form a non-woven material.

In an embodiment, the liquid treatment medium includes an ion exchange resin.

This embodiment is suitable for use in tanks of appliances for preparing aqueous beverages such as tea, coffee and/or soups. It can also be used in tanks of steamers or humidifiers or the like. In such embodiments, the device helps prevent scaling. Ion exchange resins generally have the same or a higher density than water, in particular as they tend to bind water. This helps weigh down the device onto the fitting in the tank. The ion exchange resin may be a cation exchange resin. An example includes a weakly acidic cation exchange resin. For preventing deposits of calcium or magnesium carbonate, the majority, e.g. essentially all, of the cation exchange resin may be in the hydrogen form. That is to say that the majority of the active sites are occupied by hydrogen ions, at least before use. In use, the hydrogen reacts with hydrogen carbonate to form carbon dioxide and water. The carbon dioxide is gassed out in the tank.

In an embodiment, the filling includes beads made of a material having a density equal to or higher than that of water.

The beads may be made of ceramics or silicate glass, for example. Given that the liquid treatment device does not rely on a (proprietary) interface to keep it placed on the fitting, the beads help to weigh down the liquid treatment device. They allow the liquid to pass through the interior of the device so as to contact the liquid treatment medium. The bead material may be chemically resilient, as is the case for glass, for example, to allow the liquid treatment device to be used to treat potable liquids such as drinking water from the mains water supply. This also makes the material compatible with the liquid treatment medium, e.g. where the latter increases the acidity of the liquid.

According to another aspect, the liquid treatment system according to the invention includes at least one liquid treatment device according to the invention.

The system does not rely on the use of cartridges with components of a proprietary interface for connection to the fitting in order to provide treated liquid. The system may be comprised in an appliance for processing water, in particular for heating water to produce steam or a hot beverage.

According to another aspect, the method according to the invention is characterised by placing the liquid treatment device on the fitting such that at least an end section of the fitting is received in a recess in at least one outer wall of the housing.

The method minimises the risk that insufficiently treated liquid bypasses the liquid treatment device or passes through it along a relatively short path on its way out of the tank. It ensures that the liquid is treated before leaving the tank, and is thus less reliant on diffusion of undesirable dissolved substances to the device within the tank.

In an embodiment of the method, the liquid treatment device is a liquid treatment device according to the invention.

The invention will be explained in further detail with reference to the accompanying drawings, in which:
Fig. 1 is a perspective view of a tank for an appliance with a section of a wall thereof cut out to show the tank interior;
Fig. 2 is a perspective view from above of a first liquid treatment device;
Fig. 3 is a perspective view from below of the first liquid treatment device;
Fig. 4 is a perspective view of the tank of Fig. 1 with a section of the wall cut out to show the liquid treatment device of Figs. 2 and 3 in place;
Fig. 5 is a perspective view corresponding to that of Fig. 4 but with a section of the liquid treatment device cut out to show a fitting defining an outlet of the tank;
Fig. 6 is a perspective view from above of a second liquid treatment device;
Fig. 7 is a perspective view from below of the liquid treatment device of Fig. 6;
Fig. 8 is a perspective view from above of a third liquid treatment device; and
Fig. 9 is a perspective view from below of the liquid treatment device of Fig. 8.

The following description will use the example of an aqueous liquid as the liquid to be treated. In particular, it will be assumed that the aqueous liquid is drinking water, e.g. mains water. The liquid treatment device can easily be adapted to treat other types of liquids by an appropriate choice of materials for forming the filling and the housing of the device. The device is for use in a tank 1 of an appliance provided at a point of use of drinking water. Examples of appliances include in particular but not exclusively appliances for preparing hot beverages such as coffee, tea, drinking chocolate and/or soup, as well as appliances for generating hot water and/or steam (e.g. steamers, rice cookers and the like). Such appliances include a heating element (not shown), which is to be protected from scaling by treating the drinking water. Where such appliances are for preparing food or beverages, the taste of the water may need to be improved, e.g. if the untreated drinking water is relatively heavily chlorinated.

The tank 1 includes a fitting 2 projecting from a bottom wall 3 of the tank 1 into its interior. The fitting may be, but need not necessarily be, provided with elements of a mechanical interface. These enable it to mate with a cartridge (not shown) provided with the appropriate elements of the (proprietary) mechanical interface. It may happen that the types of mating cartridge available are unsuitable in terms of the type of treatment they are configured to carry out, or they may generally be unavailable. A first universal cartridge 4 for treating drinking water in the tank 1 is therefore provided. It can be placed over at least an end section of the fitting 2 distal from the bottom wall 3. In the illustrated example, it is provided with a recess 5, allowing it to be placed over the entire fitting 2 such as to touch the bottom wall 3 around the fitting 2. The fitting defines an outlet 6 of the tank 1. This outlet will generally lead to a suction pump (not shown), depending on the construction of the appliance.

The universal cartridge 4 includes a housing made entirely of sheet material. In the illustrated embodiment, it is made of a top sheet 7 and a formed bottom sheet 8, welded together at respective circumferential edges. A filling is interposed between the sheets 7,8. The sheets 7,8 may be made of a non-woven textile material, e.g. including or consisting of polypropylene fibres.

The top sheet is flat in the sense of being free of indentations and raised parts, although it may bulge outwards, depending on how tightly packed the universal cartridge 4 is, and/or the extent to which the filling material has swollen. Thus, the top sheet 7 can be separated from a roll of sheet material, e.g. by cutting or punching. It has a generally oval shape. Thus, seen from above in plan view, the housing has an outline that is essentially oval in shape. In particular where the height of the universal cartridge 4 is smaller than its largest dimension, call it its length, the width will then be smaller than the length. Since the universal cartridge 4 is reversibly, in particular essentially elastically, deformable, it can be passed through a narrow fill opening (not shown) by squeezing it to reduce its width temporarily.

The formed bottom sheet 8 is obtained by forming a flat sheet of material into a three-dimensional shape in a die. In the case of sheet material including thermoplastic fibres, it is obtainable by thermoforming. In the process, it is provided with a lateral wall, which flares outwards into an essentially flat strip of material forming a circumferential edge. The flat strip of material lies in a plane and, seen in plan view, has an essentially oval outline corresponding to that of the top sheet 7. The lateral wall transitions into an end wall in which the recess 5 is formed. The recess 5 is thus an indentation debossed into the section of the formed bottom sheet 8 that provides the bottom wall. The indentation may be so large that the surrounding bottom wall has a very small area. The forming process provides the formed bottom sheet 8 with shape memory, so that the section forming the recess 5 is essentially self-supporting. Other parts for providing the sheet material with its shape are thus dispensed with.

To produce the universal cartridge 4, the formed bottom sheet 8, which may at that stage be supported by the die or some other device with a correspondingly shaped cavity, is filled with the filling. The top sheet 7 is then placed on top such that a strip around its circumferential edge lies on top of the strip provided at the edge of the lateral wall of the formed bottom sheet 8. The strips are then welded together, e.g. ultrasonically.

The filling comprises essentially granular material, in particular beads of ion exchange resin. The ion exchange resin may be cation exchange resin. For use in preventing scale without making the water very salty, the cation exchange resin may be a weakly acidic cation exchange resin in the hydrogen form. This material will also remove heavy metals from the water to at least some extent. Anion exchange resin may be included for complete demineralisation. In an embodiment, activated carbon, in granular or fibre form is included in the liquid treatment medium. Common types of ion exchange resin have a density larger than water, so that the universal cartridge 4, once placed over the fitting 2, will not float up in the tank 1. However, in an embodiment, the filling may include (silicate) glass beads to weigh down the universal cartridge 4.

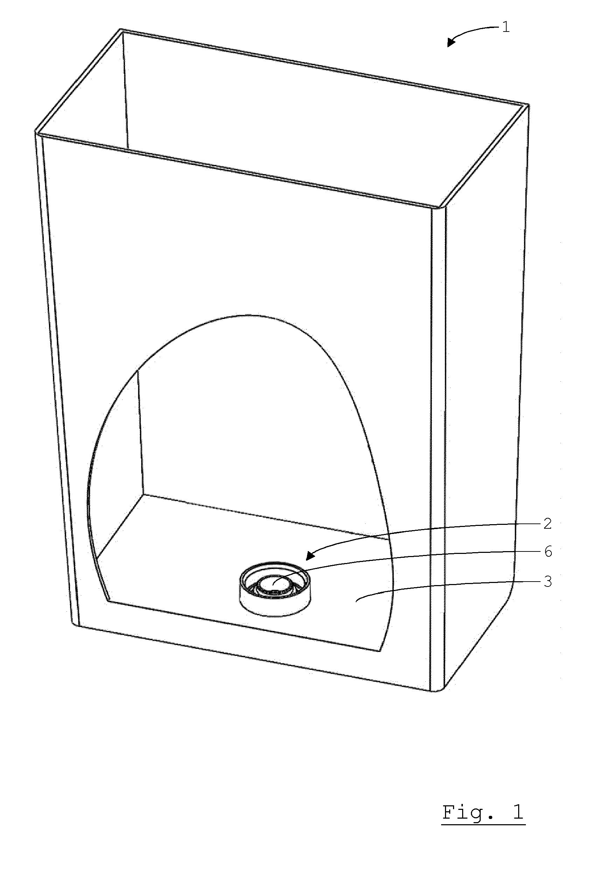

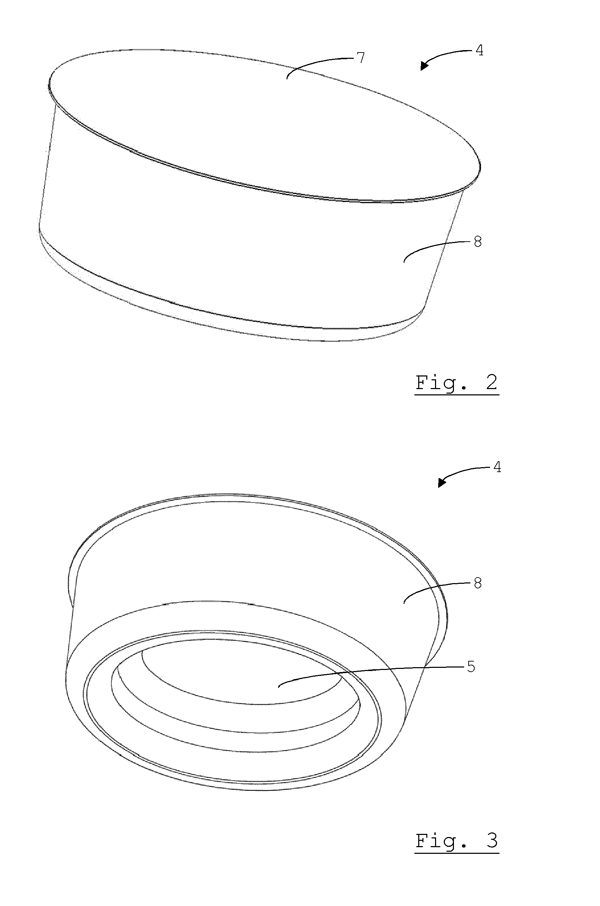

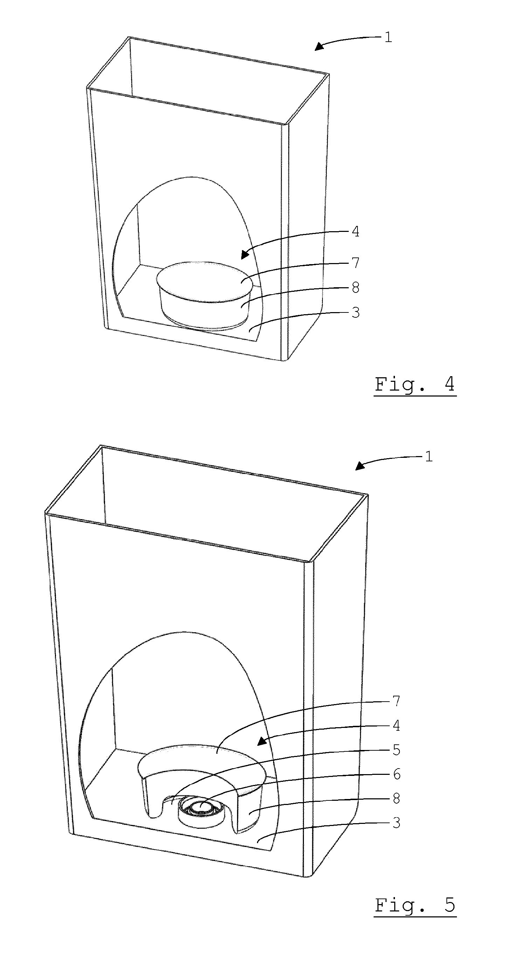

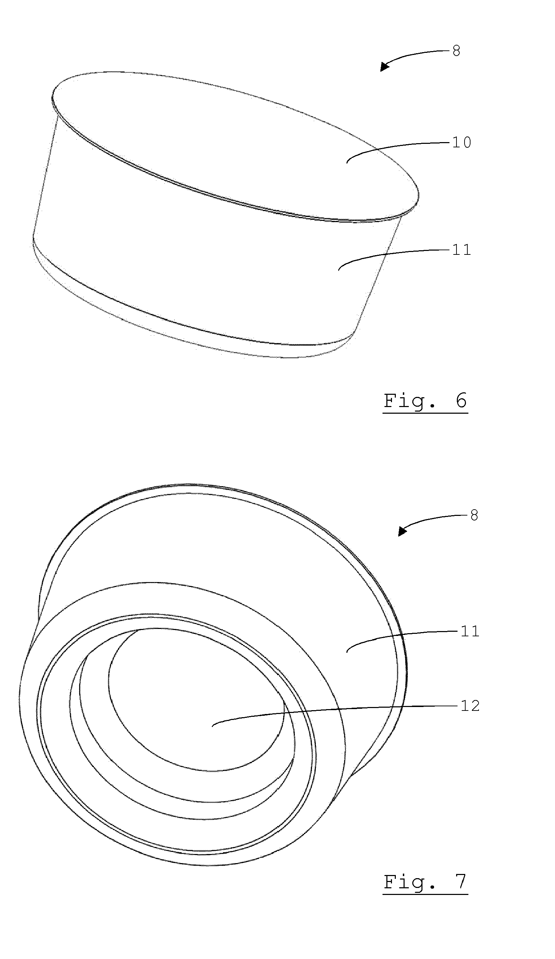

A second universal cartridge 9 (Figs. 6,7) is obtainable in essentially the same way as the universal cartridge 4 shown in Figs. 1-5. It includes a top sheet 10 and a formed bottom sheet 11 with a recess 12. The sheets 10,11 are made of the same type of sheet material and obtainable in the same manner as the corresponding sheets 7,8 of the universal cartridge 4 shown in Figs. 1-5. They are joined together in the same manner and the filling is also the same. The second universal cartridge 9 differs in that, seen in top plan view, it has an essentially circular outline. Thus, the top sheet 10 is essentially circular in shape. This means that the top sheet 10 and the formed bottom sheet 11 do not require exact alignment when joining them together. The second universal cartridge 9 also fits tanks that are narrower than the illustrated tank 1 or of which the bottom wall is provided with obstructions close to the fitting.

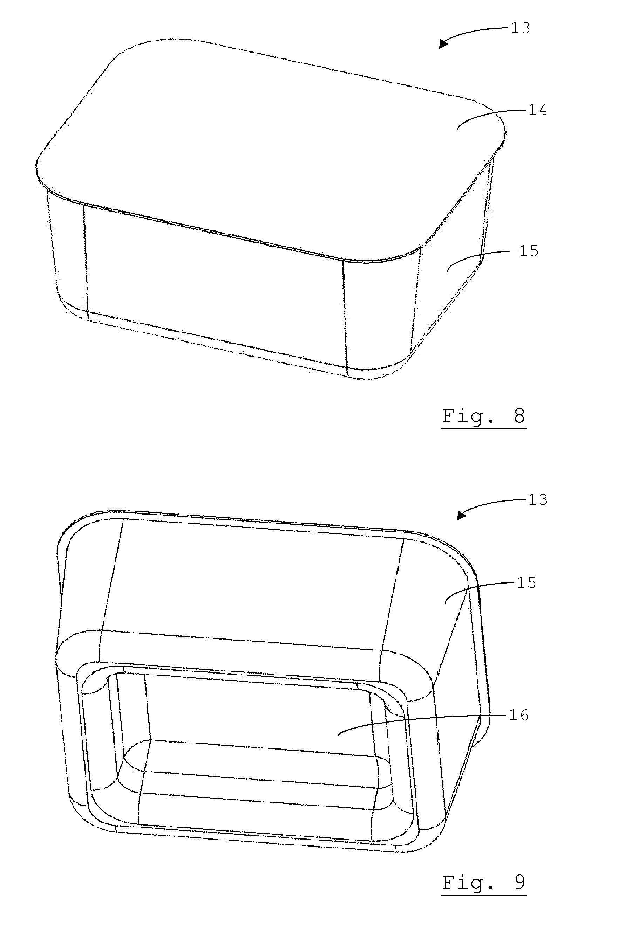

A third universal cartridge 13 (Figs. 8,9) is also obtainable in essentially the same way as the other two universal cartridges 4,9. It includes a top sheet 14 and a formed bottom sheet 15 with a recess 16 formed therein. The sheets 14,15 are made of the same type of sheet material and obtainable in the same manner as the corresponding sheets 7,8,10,11 of the other two universal cartridges 4,9. They are joined together in the same manner and the filling of the third universal cartridge 13 is also the same.

The third universal cartridge 13 differs in that, seen in top plan view, it has an essentially rectangular, in this example oblong, outline, albeit with rounded corners. This represents an alternative solution to the problem of obstructions close to the projecting fitting, in that the obstructions can simply be received in the recess 16. The third universal cartridge 13 can be dimensioned to cover a substantial part, if not all of the bottom wall 3 of the tank 1. The third universal cartridge 13 may extend laterally to side walls of the tank 1, but it need not seal against them at the edges, since the recess 16, as in the other embodiments, prevents a bypass of water past and underneath the cartridge 13 to an inlet defined by the fitting 2.

The invention is not limited to the embodiments described above, which may be varied within the scope of the accompanying claims. For example, the recess 5,12,16, seen in plan view, need not have an outline congruent with that of the housing of the universal cartridge 4,9,13.

The fitting may be a simple pipe end or may include a pipe end projecting from the bottom wall with mechanical interface elements provided only at its very end. It need not be formed entirely of parts projecting from the bottom wall 3, but may extend through the wall 3. It may comprise multiple concentric parts of which only an inner one serves to connect the fitting to a proprietary cartridge, whereas the universal cartridge 4,9,13 envelops all the concentric parts.

In an alternative embodiment, the recesses 5,12,16 and/or the bowl shape of at least one of the sheets of material forming the housing is defined by a frame to which the sheet material is attached, so that the sheet material need not be thermoformed.

In a further embodiment, baffles or interior walls extending between the top sheets 7,10,14 and the formed bottom sheets 8,11,15 may sub-divide an interior of the universal cartridge cartridge 4,9,13, or it may be quilted. It can thus be more flexible without giving rise to pockets empty of liquid treatment medium.

### LIST OF REFERENCE NUMERALS

- 1: - tank
- 2: - fitting
- 3: - bottom wall of tank
- 4: - 1^{st} universal cartridge
- 5: - recess
- 6: - outlet
- 7: - top sheet
- 8: - formed bottom sheet
- 9: - 2^{nd} universal cartridge
- 10: - top sheet
- 11: - formed bottom sheet
- 12: - recess
- 13: - 3^{rd} universal cartridge
- 14: - top sheet
- 15: - formed bottom sheet
- 16: - recess

## Claims

1. Liquid treatment device for placement in a tank (1) and including a housing made at least in part of pervious sheet material,
wherein the housing contains a filling, the filling including a liquid treatment medium for treating liquid contacting the liquid treatment medium, **characterised in that**
at least one recess (5;12;16) for receiving at least an end section of a projecting fitting (2) is pre-formed in at least one outer wall of the housing.

2. Liquid treatment device according to claim 1, wherein the housing is at least reversibly, e.g. elastically, deformable.

3. Liquid treatment device according to claim 1 or 2, wherein, seen in plan view, the housing has an outline essentially in the shape of one of an oval, a rhombus and a rhomboid.

4. Liquid treatment device according to any one of the preceding claims,
wherein the recess (5;12;16) is formed by an indentation debossed in a section of the sheet material.

5. Liquid treatment device according to any one of the preceding claims,
wherein at least all outer surfaces of the housing are defined essentially only by sheet material.

6. Liquid treatment device according to any one of the preceding claims,
wherein the housing includes a first sheet (7;10;14) of material joined at a circumferential edge to at least a second sheet (8;11;15) of material.

7. Liquid treatment device according to claim 6, wherein at least one, e.g. only the first, of the first and second sheets (7,8;10,11;14,15) is essentially flat along at least its circumference.

8. Liquid treatment device according to claim 6 or 7, wherein the second sheet (8;11;15) is obtainable by being drawn mechanically into a forming die, e.g. by thermoforming, such as to form a lateral wall extending to a circumferential edge, and
wherein the first and second sheets (7,8;10,11;14,15) are joined to each other at their circumferential edges.

9. Liquid treatment device according to any one of claims 6-8,
wherein the first and second sheets (7,8;10,11;14,15) are welded together.

10. Liquid treatment device according to any one of the preceding claims,
wherein the pervious sheet material is a textile material, e.g. a non-woven material.

11. Liquid treatment device according to any one of the preceding claims,
wherein the sheet material includes a thermoplastic material.

12. Liquid treatment device according to any one of the preceding claims,
wherein the filling includes beads made of a material having a density equal to or higher than that of water.

13. Liquid treatment system including:
a tank (1) for accommodating liquid to be treated;
a fitting (2) defining an outlet of the tank (1),
the fitting (2) protruding from a wall (3) of the tank (1) into its interior; and
at least one liquid treatment device (4;9;13) according to any one of the preceding claims.

14. Method of treating a liquid in a tank (1), e.g. a tank of an appliance,
the tank (1) being arranged to accommodate liquid to be treated,
wherein the tank (1) is provided with a fitting (2) protruding from a wall of the tank (1) into its interior,
wherein the method includes placing a liquid treatment device (4;9;13) in the tank (1),
the liquid treatment device (4;9;13) including a housing made at least in part of pervious sheet material,
wherein the housing contains a filling, the filling including a liquid treatment medium for treating liquid contacting the liquid treatment medium, **characterised by**
placing the liquid treatment device (4;9;13) on the fitting (2) such that at least an end section of the fitting (2) is received in a recess (5;12;16) in at least one outer wall of the housing.

15. Method according to claim 14,
wherein the liquid treatment device (4;9;13) is a liquid treatment device according to any one of claims 1-12.
